# EUROPÄISCHE PATENTANMELDUNG

(11) **EP 4 193 891 A1**
(43) Veröffentlichungstag der Anmeldung: **14.06.2023**
(21) Anmeldenummer: 22208046.7
(22) Anmeldetag: 17.11.2022
(51) Int. Cl.: A47J 37/07

(54) **OUTDOOR-GRILL**

(30) Priorität: 08.12.2021 DE 102021213972
(71) Anmelder: RÖSLE GROUP GmbH, 87616 Marktoberdorf (DE)
(72) Erfinder: Billmeier, Lena, 60487 Frankfurt am Main (DE); Sang, Johannes, 55283 Nierstein (DE); Jung, David, 87439 Kempten (DE)
(74) Vertreter: Dr. Weitzel & Partner

(57) **Zusammenfassung**

Die Erfindung betrifft einen Outdoor-Grill
mit einem Untergestell (1) mit Rädern (2), wobei das Untergestell (1) eine Vorderseite (1.1), eine hierzu entgegengesetzte Rückseite (1.2) und zwei einander entgegengesetzte Außenseiten (1.3, 1.4) aufweist;
mit einem auf dem Untergestell (1) angeordneten Garraum (3); wobei das Untergestell (1) einen Schrank (4) mit wenigstens einer Schwingtüre (5) ausbildet, die die Vorderseite (1.1)des Untergestells (1) wenigstens teilweise abdeckt und um eine Vertikalachse (6) seitlich nach außen verschwenkbar ist;
mit wenigstens einem Seitentisch (7), der seitlich zum Garraum (3) auf einer Außenseite (1.3, 1.4) des Untergestells (1) oder einer Seitenwand (3.1) des Garraums (3) montiert ist.

Der erfindungsgemäße Outdoor-Grill ist dadurch gekennzeichnet, dass der wenigstens eine Seitentisch (7) verschwenkbar um eine erste Horizontalachse(8), die parallel zur Außenseite (1.3, 1.4) verläuft, oberhalb eines Griffes (9) zum Verschieben des Outdoor-Grills und/oder zum Anheben der Außenseite (1.3, 1.4) am Untergestell (1) oder der Seitenwand (3.1) angeschlossen ist.

## Beschreibung

Die vorliegende Erfindung betrifft einen Outdoor-Grill gemäß dem Oberbegriff von Anspruch 1.

Outdoor-Grills erfreuen sich einer zunehmenden Beliebtheit, insbesondere in Form von Gasgrills in Privathaushalten und im Rahmen von Betriebsveranstaltungen auch in Unternehmen. Wenn ein solcher Outdoor-Grill als Gasgrill ausgeführt ist, so können damit lange Anglühzeiten vermieden werden und rasch verschiedene Temperaturniveaus, insbesondere in verschiedenen Temperaturzonen, zur Verfügung gestellt werden, die ein besonders luxuriöses Grillerlebnis bieten.

Da solche Outdoor-Grills vergleichsweise groß und schwer sind, sollten sie verfahrbar sein und entsprechend ein Untergestell mit Rädern aufweisen. Um Bremsen und dergleichen an Rädern vermeiden zu können und im Hinblick auf eine verbesserte Standsicherheit sind meist nur zwei Räder an einer seitlichen Außenseite des Outdoor-Grills vorgesehen, sodass der Outdoor-Grill an einer entgegengesetzten Außenseite angehoben werden kann, um mit den Rädern schubkarrenartig verfahren zu werden.

Für ein besonders komfortables Grillerlebnis werden Outdoor-Grills heutzutage häufig mit einem oder mit zwei Seitentischen angeboten. Solche Seitentische dienen entweder nur zur Ablage von Grillutensilien oder Geschirr. Hochwertigere Outdoor-Grills bieten in einem oder beiden Seitentischen zusätzliche Grillflächen mit Brennern oder anderen Garvorrichtungen, beispielweise sogenannten Seitenkochern, an. Solche Seitentische sind in der Regel starr neben dem Garraum an einem Untergestellt des Grills, welches die Räder aufweist, angeschlossen.

Wenn nun der Outdoor-Grill mit seinen Rädern verfahren werden soll, muss ein Nutzer entweder am Seitentisch oder am Seitentisch vorbei an der entsprechenden Außenseite am Untergestell angreifen, um die Außenseite anzuheben. Der Seitentisch wird dabei Belastungen und Hebelwirkungen ausgesetzt, für die er nicht konstruiert ist. Ein Angreifen direkt an der Außenseite ist für den Nutzer unkomfortabel.

US 2018/0132660 A1 offenbart ein Ausführungsbeispiel für einen gattungsgemäßen Outdoor-Grill mit zwei feststehenden Seitentischen.

EP 1 180 339 B1 offenbart einen Outdoor-Grill, dessen Seitentische abnehmbar sind und innerhalb eines Untergestells, das einen Ascheauffangbehälter aufweist, verstaubar sind.

EP 2 912 977 B1 offenbart einen tragbaren Gasgrill, dessen Seitentische an Achsen gelenkig angeschlossen sind und nach oben geklappt werden können, damit der Grill leichter getragen werden kann.

US 5 471 916 A offenbart einen Kohlegrill auf einem verfahrbaren Gestell, an welchem Seitentische verschwenkbar an einem Griff angeschlossen sind. Im nach unten geklappten Zustand der Seitentische ist das Erfassen des Griffs schwierig.

Der vorliegenden Erfindung liegt die Aufgabe zugrunde, einen Outdoor-Grill der eingangs genannten Art derart zu verbessern, dass ein Anheben des Grills und insbesondere ein Verfahren des Grills über die am Untergestell angeschlossenen Räder komfortabler und belastungsärmer möglich ist.

Die erfindungsgemäße Aufgabe wird durch einen Outdoor-Grill mit den Merkmalen von Anspruch 1 gelöst. Die abhängigen Ansprüche beschreiben vorteilhafte und besonders zweckmäßige Ausgestaltungen der Erfindung.

Ein erfindungsgemäßer Outdoor-Grill, der insbesondere als Gasgrill ausgeführt ist, umfasst ein Untergestell mit Rädern, wobei das Untergestell eine Vorderseite, ein hierzu entgegengesetzte Rückseite und zwei einander entgegengesetzte Außenseiten aufweist. Beispielsweise sind zwei Räder im Bereich einer Außenseite des Untergestells vorgesehen, sodass der Outdoor-Grill beziehungsweise das Untergestell an der gegenüberliegenden Außenseite angehoben werden kann und der Outdoor-Grill dann schubkarrenartig verfahren werden kann. Alternativ weist das Untergestell mehr als zwei Räder auf, beispielsweise ein Rad an jeder unteren Ecke des Untergestells, was das Verfahren erleichtert. In diesem Fall muss keine Außenseite beim Verfahren des Outdoor-Grills mehr angehoben werden, kann jedoch bei Bedarf einfach angehoben werden.

Auf dem Untergestell ist ein Garraum angeordnet und das Untergestell bildet einen Schrank mit wenigstens einer Schwingtüre aus. Die wenigstens eine Schwingtüre überdeckt die Vorderseite des Untergestells wenigstens teilweise oder zumindest im Wesentlichen vollständig und ist um eine Vertikalachse seitlich nach außen verschwenkbar. Gemäß einer Ausführungsform ist eine einzige Schwingtüre vorgesehen, die seitlich nach außen verschwenkbar ist. Gemäß einer anderen Ausführungsform sind beispielsweise zwei Schwingtüren vorgesehen, die entgegengesetzt zueinander seitlich nach außen verschwenkbar sind und gemeinsam die Vorderseite des Untergestells abdecken. Die wenigstens eine Schwingtüre oder die beiden Schwingtüren können eben sein oder bevorzugt sich dreidimensional im Raum erstrecken, indem sie im Bereich ihres Anschlusses an der Vertikalachse, um welche sie seitlich nach außen verschwenkbar sind, mit einer Abkantung oder Umbiegung versehen sind, sodass die oder jede Schwingtüre einen entsprechenden Raum in der Tiefenrichtung des Untergestells umschließt und auch seitlich abdeckt.

Prinzipiell können auch mehr als zwei Schwingtüren vorgesehen sein, beispielsweise indem mehrere Schwingtüren übereinander angeordnet sind.

Der erfindungsgemäße Outdoor-Grill weist wenigstens einen Seitentisch auf, der seitlich zum Garraum, insbesondere auf einer Außenseite des Untergestells oder einer Seitenwand des Garraums, montiert ist. Der Seitentisch ist insbesondere diagonal zu den Rädern beziehungsweise zu zwei Rädern, insbesondere an dem Untergestell oder der Seitenwand, montiert. Wenn der Outdoor-Grill zwei Seitentische auf entgegengesetzten Seiten des Outdoor-Grills aufweist, insbesondere auf den entgegengesetzten Außenseiten des Untergestells oder auf entgegengesetzten Seitenwänden des Garraums, so kann einer oder können beide erfindungsgemäß, wie nachfolgend beschrieben, montiert sein, insbesondere am Untergestell und/oder an der Seitenwand des Garraums.

Erfindungsgemäß ist der wenigstens eine Seitentisch verschwenkbar um eine erste Horizontalachse, die parallel zur Außenseite verläuft, wobei hierunter auch ein Verlauf innerhalb einer Fläche der Außenseite zu verstehen ist, oberhalb eines Griffes zum Verschieben des Outdoor-Grills und/oder zum Anheben der Außenseite wenigstens mittelbar am Untergestell, insbesondere unmittelbar am Untergestell oder an der Seitenwand des Garraums, angeschlossen. Damit kann der Seitentisch einfach nach oben um die erste Horizontalachse verschwenkt werden, um dadurch den unter ihm, insbesondere mit Abstand zu ihm angeordneten Griff mehr oder minder freizugeben, sodass ein Nutzer leicht den Griff fassen kann, um den Outdoor-Grill an dieser Außenseite anzuheben oder auch einfach nur zu verschieben. Ein Anheben oder Greifen am Seitentisch oder direkt an der Außenseite ist nicht mehr notwendig.

Der Griff ist insbesondere ein Bügelgriff, der aus der Außenseite hervorsteht. Der Griff kann unmittelbar am Untergestell oder auch an der darüber positionierten Seitenwand des Garraums montiert sein oder integral mit diesem/dieser ausgebildet sein.

Insbesondere ist der wenigstens eine Seitentisch aus einer ersten horizontalen Gebrauchsposition nach oben in eine zumindest im Wesentlichen vertikale Verstauposition verschwenkbar. Die Verstauposition ist insbesondere um wenigstens 70° oder wenigstens 80° gegenüber der Gebrauchsposition nach oben versetzt.

Bevorzugt ist der Griff auch in der Gebrauchsposition des Seitentisches mit Abstand zu dem Seitentisch angeordnet. In der Regel überragt der Seitentisch den Griff jedoch in diesem Zustand in der Horizontalrichtung, sodass der Seitentisch weiter aus der Außenseite hervorsteht als der Griff.

Bevorzugt ist eine um eine zweite Horizontalachse, die parallel zur Vorderseite des Untergestells verläuft, verschwenkbare Haube vorgesehen, die den Garraum wahlweise abdeckt oder freigibt. Auch die verschwenkbare Haube kann beispielsweise am Untergestell und/oder an einer Rückwand des Garraums montiert sein. Die Haube kann von einem Nutzer zum Öffnen des Garraumes somit nach oben hinten verschwenkt werden. Damit kann im geschlossenen Zustand der Haube die Hitze besser im Garraum gehalten werden.

Um ein unbeabsichtigtes Herunterfallen oder Herunterschwenken des wenigstens einen Seitentischs aus der Verstauposition zu vermeiden, ist bevorzugt eine Arretiervorrichtung vorgesehen, mittels welcher der wenigstens eine Seitentisch in der Verstauposition gegen Verschwenken fixierbar ist. Gemäß einer Ausführungsform der Erfindung ist der wenigstens eine Seitentisch auch in der Gebrauchsposition mittels der Arretiervorrichtung gegen Verschwenken fixierbar. Damit wird ein unbeabsichtigtes Hochschwenken des Seitentischs vermieden und gegebenenfalls kann der Seitentisch zum Anheben der Außenseite des Grills verwendet werden. Eine andere Ausführungsform sieht vor, dass der Seitentisch aus der Gebrauchsposition ohne Fixierung oder Arretierung nach oben verschwenkbar ist, um zu vermeiden, dass ein Nutzer den Outdoor-Grill am Seitentisch anhebt. Ein unbeabsichtigtes Verschwenken kann auch, wie nachfolgend noch beschrieben wird, mit wenigstens einem Dämpfer verhindert werden.

Gemäß einer besonders kompakten und leicht zu handhabenden Ausführungsform ist wenigstens ein Dämpfer, insbesondere Hydraulikdämpfer, vorgesehen, der den Seitentisch zumindest in der Verstauposition hält und gegen ein Herunterfallen in die Gebrauchsposition sichert. Bevorzugt ist im Bereich von jedem seitlichen Ende des verschwenkbaren Seitentischs ein entsprechender Dämpfer vorgesehen.

Der Dämpfer ist bevorzugt eingerichtet, ein Widerstandsmoment um die erste Horizontalachse aufzubringen, das einer Verschwenkung des Seitentischs um die erste Horizontalachse entgegengerichtet ist, sodass beim Verschwenken des Seitentischs dieses Widerstandsmoment überwunden werden muss. Der Dämpfer kann das Widerstandsmoment beim Verschwenken des Seitentischs aus der Verstauposition in die Gebrauchsposition und/oder beim Verschwenken des Seitentischs aus der Gebrauchsposition in die Verstauposition aufbringen.

Der Dämpfer kann vorteilhaft als Hydraulikdämpfer oder als Pneumatikdämpfer ausgeführt sein, beispielsweise als Gasdruckfeder. Andere mechanische und/oder magnetische Ausführungsformen sind ebenfalls möglich, bei denen entsprechend eine Reibkraft und/oder eine Magnetkraft dem Verschwenken des Seitentischs entgegenwirkt. Auch eine Lösung mit einer mechanischen Feder, insbesondere Torsionsfeder, Druckfeder und/oder Zugfeder ist möglich.

Insbesondere, wenn der wenigstens eine Dämpfer als Gasdruckfeder ausgeführt ist, die ein Drehmoment im Sinne eines Hochklappens des Seitentischs in der Verstauposition erzeugt, ist die Gasdruckfeder vorteilhaft derart am Seitentisch und beispielsweise dem Untergestell angeschlossen, dass sie in der Gebrauchsposition eine Zugkraft auf den Seitentisch beziehungsweise ein Drehmoment entgegen der Hochklappbewegung aufbringt, um ein versehentliches Hochklappen des Seitentischs zu vermeiden.

Besonders günstig ist es, wenn der Seitentisch mit einem Viergelenk am Untergestell angeschlossen ist. Dadurch wird ein sicher geführter Verschwenkmechanismus gewährleistet, der insbesondere mit einer Hand bedient werden kann, ohne dass eine Schrägstellung die Mechanik blockiert. Ein solches Viergelenk weist insbesondere vier parallel zueinander angeordnete Drehachsen auf, die sich in der Regel parallel zur Außenseite des Untergestells und/oder zu einer Seitenwand des Garraums erstrecken und durch im Bereich der Vorderseite und im Bereich der Rückseite des Outdoor-Grills beziehungsweise des Untergestells/Garraums angeordnete Mehrgelenkscharniere oder Koppelgetriebe gebildet werden.

Gemäß einer alternativen Ausführungsform ist der Seitentisch mit einem einfachen Gelenk, das heißt mit einem gelenkigen Anschluss, gegebenenfalls auf beiden Seiten des Seitentischs, am Untergestell angeschlossen und entsprechend mit diesem gelenkigen Anschluss auf der ersten Horizontalachse gelagert. Das bedeutet alle gelenkigen Verbindungen zwischen dem Seitentisch und dem Untergestell liegen auf der ersten Horizontalachse.

Der Seitentisch kann einen Gasanschluss umfassen, der bevorzugt eine Kupplung, insbesondere Schlauchkupplung, umfasst. Die Kupplung kann beispielsweise als Steckkupplung, bevorzugt Schnellsteckkupplung ausgeführt sein.

Besonders günstig ist es, wenn die Kupplung mit ihrer Kuppelachse und/oder Mittelachse entlang der ersten Horizontalachse angeordnet und kuppelbar ist.

Die Arretiervorrichtung umfasst vorteilhaft einen durch den Nutzer betätigbaren Hebel, insbesondere Gelenkhebel, der von außen zugängig ist, um den Seitentisch gegen Verschwenken zu verriegeln und/oder freizugeben.

Wenn der Outdoor-Grill als Gasgrill ausgeführt ist, weist er bevorzugt im Garraum eine erste Grillfläche mit einem oder mehreren Hauptbrennern auf und im Seitentisch eine zweite Grillfläche mit wenigstens einem Nebenbrenner beziehungsweise Seitenbrenner. Insbesondere kann im Seitentisch ein Hochtemperaturbrenner vorgesehen sein und/oder ein Infrarotbrenner. Dabei kann Gas in einen Thermoblock, insbesondere in einen keramischen Block, mit einer Vielzahl von Kanälen eingeleitet werden, sodass sich der Thermoblock auf Temperaturen von über 600°C, 700°C oder sogar 800° C aufheizt und Strahlungswärme im Infrarotspektrum an das Grillgut abgibt. Zusätzlich oder alternativ kann im Seitentisch auch ein sogenannter Seitenkocher vorgesehen sein.

Bevorzugt ist wenigstens ein Rad im Bereich der Vorderseite vorgesehen und wenigstens ein Rad ist im Bereich der Rückseite vorgesehen und jeweils am Untergestell montiert, sodass der Outdoor-Grill parallel zur Vorderseite des Untergestells verschoben werden kann.

Die Schwingtüre ist besonders bevorzugt bis unter den Seitentisch verschwenkbar, insbesondere auch in der Gebrauchsposition des Seitentischs, um einen Zugriff auf den Innenraum des Untergestells zu erleichtern.

Die Haube kann mit einer elektrischen Beleuchtung versehen sein, mit welcher der Garraum im geschlossenen Zustand der Haube und/oder im offenen Zustand der Haube beleuchtet wird. Wenn eine Beleuchtung auch im geschlossenen Zustand erfolgt, so weist die Haube bevorzugt ein Sichtfenster auf, durch welches der Garraum einsehbar ist. Bevorzugt ist die wenigstens eine Beleuchtung im Bereich der Vorderseite des Untergestells an der Haube angeschlossen, um eine Blendung des Nutzers zu vermeiden. Sie leuchtet entsprechend in Richtung der Rückseite oder schräg zur Vorderseite.

Auch der Schrank im Untergestell kann eine elektrische Beleuchtung aufweisen.

Der Schrank kann insbesondere wenigstens einen oder mehrere Regalböden aufweisen, die vorteilhaft höhenverstellbar im Untergestell montiert sind. Die Höhenverstellung kann beispielsweise dadurch erreicht werden, dass auf verschiedenen Höhen Regalbodenhalter vorgesehen sind, auf die wahlweise ein Regalboden aufgeschoben oder aufgesteckt werden kann.

Innen an der wenigstens einen Schwingtüre können Halter zur Aufnahme, insbesondere zur Aufhängung von Grillzubehör, vorgesehen sein. Beispielsweise können Haken, Behälter, Halterungen und dergleichen magnetisch an der wenigstens einen Schwingtür angeschlossen sein.

Im Untergestell kann ein Aufnahmeraum für eine Gasflasche vorgesehen sein, der beispielsweise von einem Abteil mit dem oder den Regalböden durch eine Zwischenwand abgetrennt ist. Es können Gleitschienen auf einem Boden des Untergestells vorgesehen sein, über welche die Gasflasche reibungsarm verschoben werden kann. Wenn die Gleitschienen eine größere Erstreckung in die Tiefenrichtung als die Gasflasche aufweisen, so kann die Gasflasche vorne im Untergestell aufgesetzt und dann auf den Gleitschienen leicht nach hinten in Richtung Rückseite verschoben werden, wodurch ein zusätzlicher Stauraum vor der Gasflasche freigegeben wird. Gemäß einer Ausführungsform kann der Stauraum für die Gasflasche durch eine Gasflaschenabdeckung, die in das Untergestell als Zwischenwand eingesetzt wird, nachdem die Gasflasche nach hinten verschoben wurde, vom zusätzlichen Stauraum vor der Gasflasche abgetrennt werden, beispielsweise mit einem Blech. Dies hat nicht nur optische Vorteile, sondern das Blech beziehungsweise allgemein die Zwischenwand kann wiederum verwendet werden, um Aufhänger und dergleichen für Zubehör zu schaffen. Beispielsweise können auch hier Haken, Behälter, Halterungen und dergleichen magnetisch an der Zwischenwand angeschlossen werden.

Wenn der Outdoor-Grill eine Stromversorgung benötigt, beispielsweise für die Beleuchtung und/oder einen Motor eines Drehspießes, so ist vorteilhaft eine elektrische Speichereinrichtung vorgesehen, die über einen elektrischen Netzanschluss aufgeladen werden kann. Gemäß einer besonders vorteilhaften Ausgestaltung weist der Outdoor-Grill eine Schnittstelle für eine Powerbank auf, die als elektrische Speichereinrichtung an der Schnittstelle, beispielsweise über einen USB-Anschluss, angeschlossen werden kann.

Die Erfindung soll nachfolgend anhand eines Ausführungsbeispiels und den Figuren exemplarisch beschrieben werden.

Es zeigen:
- Figur 1: eine Ansicht schräg auf die Vorderseite eines erfindungsgemäßen Outdoor-Grills;
- Figur 2: den Seitentisch eines erfindungsgemäßen Outdoor-Grills in der Gebrauchsposition;
- Figur 3: den Seitentisch in der Verstauposition;
- Figur 4: den Seitentisch in der Gebrauchsposition mit um 180 Grad geöffneter Schwingtüre des Untergestells;
- Figur 5: ein Ausführungsbeispiel für einen gelenkigen Anschluss des Seitentischs am Untergestell beziehungsweise seitlich am Garraum;
- Figuren 6-11: die Funktionalität des gelenkigen Anschlusses des Seitentischs am Untergestell beziehungsweise seitlich am Garraum;
- Figur 12: eine Ansicht schräg von hinten in die Haube mit einer elektrischen Beleuchtung;
- Figur 13: ein Ausführungsbeispiel für die Aufteilung eines Schranks des Outdoor-Gasgrills;
- Figur 14: den Aufnahmeraum für eine Gasflasche im Schrank;
- Figur 15: den abgedeckten Aufnahmeraum für eine Gasflasche im Schrank;
- Figur 16: ein weiteres Ausführungsbeispiel für den gelenkigen Anschluss des Seitentischs am Untergestell;
- Figur 17: den Seitentisch aus der Figur 16 in der Gebrauchsposition.

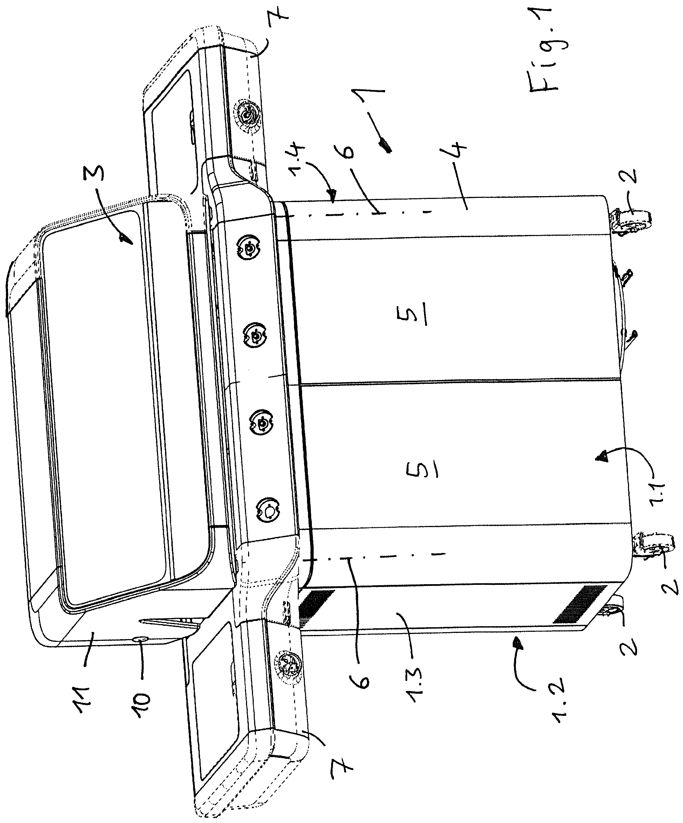

In der Figur 1 ist ein Outdoor-Gasgrill gezeigt, der ein Untergestell 1 mit einer Vorderseite 1.1, einer Rückseite 1.2 und zwei einander entgegengesetzten Außenseiten 1.3, 1.4 aufweist, die senkrecht zur Vorderseite 1.1 und zur Rückseite 1.2 angeordnet sind.

Das Untergestell 1 ist auf Rädern 2 verfahrbar, wobei im gezeigten Ausführungsbeispiel an allen vier unteren Ecken des Untergestells 1 jeweils ein Rad 2 vorgesehen ist. Gemäß einer alternativen Ausführungsform könnten auch nur zwei Räder 2 im Bereich nur einer Außenseite 1.3, 1.4 vorgesehen sein und im Bereich der anderen Außenseite 1.3, 1.4 wenigstens ein, zwei oder mehrere Füße, sodass der Outdoor-Gasgrill durch Anheben der Außenseite 1.3, 1.4 mit dem wenigstens einen Fuß schubkarrenartig mit den gegenüberliegenden Rädern 2 verfahrbar ist. Insbesondere können zwei Räder 2, beispielsweise auf einer der Außenseiten 1.3, 1.4 um eine Vertikalachse verschwenkbar sein und die anderen beiden Räder 2 können drehfest um eine Vertikalachse angeschlossen sein.

Auf dem Untergestell 1 ist ein Garraum 3 angeordnet, der hier durch eine Haube 11 abgedeckt ist, die über eine Horizontalachse 10, vorliegend als zweite Horizontachse 10 bezeichnet, nach oben hinten verschwenkt werden kann, um einen Zugriff auf den Garraum zu ermöglichen. Die Haube 11 weist beispielsweise ein Sichtfenster auf, das den Blick von vorne in den Garraum 3 freigibt.

An den beiden Außenseiten 1.3, 1.4 des Untergestells 1 ist jeweils ein Seitentisch 7 vorgesehen, wobei ein solcher Seitentisch 7 nur eine Abstellfunktion haben kann oder Aufhängungen für Grillutensilien haben kann oder eine Gareinrichtung, wie einen Seitenkocher oder einen Seitengrill, umfassen kann.

Im gezeigten Ausführungsbeispiel sind auf der Vorderseite 1.1 des Untergestells 1 zwei Schwingtüren 5 vorgesehen, die einen Zugang zu dem durch das Untergestell 1 gebildeten Schrank 4 ermöglichen. Die Schwingtüren 5 sind jeweils um eine Vertikalachse 6 seitlich nach außen verschwenkbar, um den Zugang zu dem Innenraum des Schranks 4 freizugeben. Anstelle von zwei Schwingtüren 5 könnte auch eine einzige die Vorderseite 1.1 abdeckende Schwingtüre 5 vorgesehen sein.

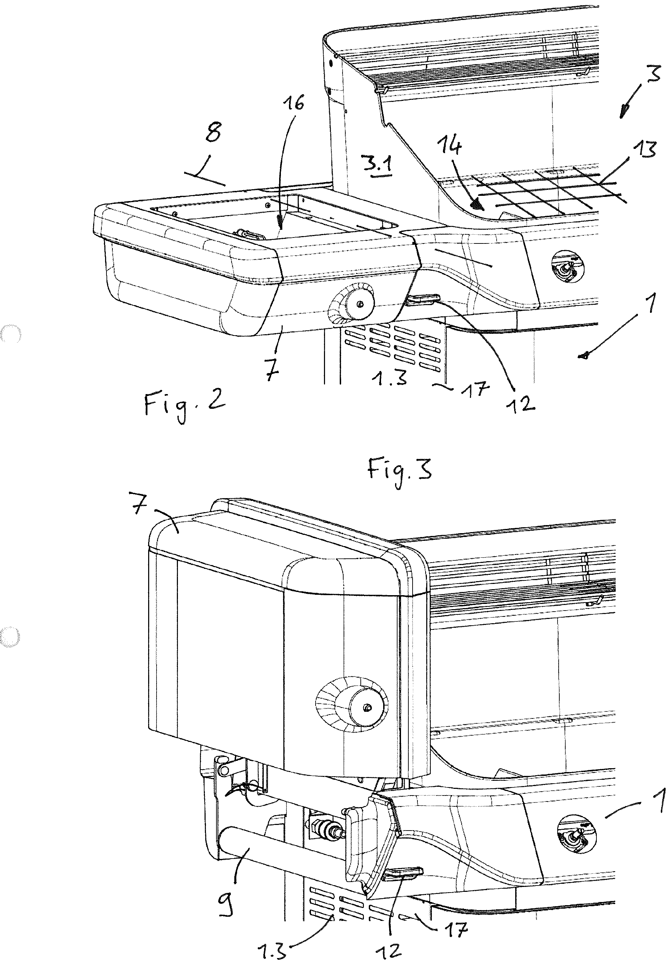

In den Figuren 2 bis 11 ist ein erfindungsgemäß um eine erste Horizontalachse 8 verschwenkbarer Seitentisch 7 gezeigt. In den Figuren 2, 4-7 befindet sich der Seitentisch 7 in seiner horizontal ausgerichteten Gebrauchsposition, in den Figuren 3 und 10-11 befindet er sich in seiner vertikal ausgerichteten Verstauposition.

Der Seitentisch 7 umfasst beispielsweise einen Nebenbrenner 16, insbesondere Hochtemperaturbrenner, beispielsweise Infrarotbrenner, der unter einer zweiten Grillfläche 15 angeordnet ist. Die erste Grillfläche 13, welche größer als die zweite Grillfläche 15 ist, ist zusammen mit einem Hauptbrenner 14 im Garraum 3 vorgesehen. Die Grillflächen 13 und 15 sind nur schematisch in den Figuren 2, 4 und 5 gezeigt.

Die Erfindung ist nicht auf die dargestellte Funktionalität des Seitentischs 7 beschränkt. Vielmehr könnte der Seitentisch 7 auch nur als Ablagefläche dienen oder beispielsweise einen Seitenkocher oder eine andere Gar- oder Nutzeinrichtung umfassen.

Unterhalb des Seitentischs 7 ist ein feststehender Griff 9 am Untergestell 1 angeschlossen. Im gezeigten Ausführungsbeispiel ist der Griff 9 mit vertikalem Abstand zum Seitentisch 7 angeordnet, zumindest wenn der Seitentisch 7 sich in der Verstauposition befindet, siehe die Figur 3. Ferner ist der Griff 9 mit Abstand zur Außenseite 1.3 des Untergestells 1 angeordnet, bezogen auf die Wand 17, welche den Schrank 4 des Untergestells 1 auf der Außenseite 1.3 seitlich begrenzt.

Um ein unbeabsichtigtes Herunterfallen des Seitentischs 7 aus seiner Verstauposition zu verhindern, ist der Seitentisch 7 in der Verstauposition mittels einer Arretiervorrichtung 12 gegen Verschwenken fixiert. Die Arretiervorrichtung 12 muss betätigt werden, um den Verschwenkmechanismus, mit welchem der Seitentisch 7 am Untergestell 1 und/oder an einer Seitenwand des Garraums 3 angeschlossen ist, derart zu lösen, dass eine mechanische Blockade gegen Zurückschwenken in die Gebrauchsposition aufgehoben wird.

Gemäß einer Ausführungsform, jedoch nicht zwingend, muss die Arretiervorrichtung 12 auch betätigt werden, um eine mechanische Blockade des Verschwenkmechanismus gegen Verschwenken aus der Gebrauchsposition in die Verstauposition zu lösen. Dies ermöglicht, dass der Outdoor-Grill am Seitentisch 7 angehoben werden kann.

Im gezeigten Ausführungsbeispiel umfasst der Verschwenkmechanismus ein sogenanntes Viergelenk 18.

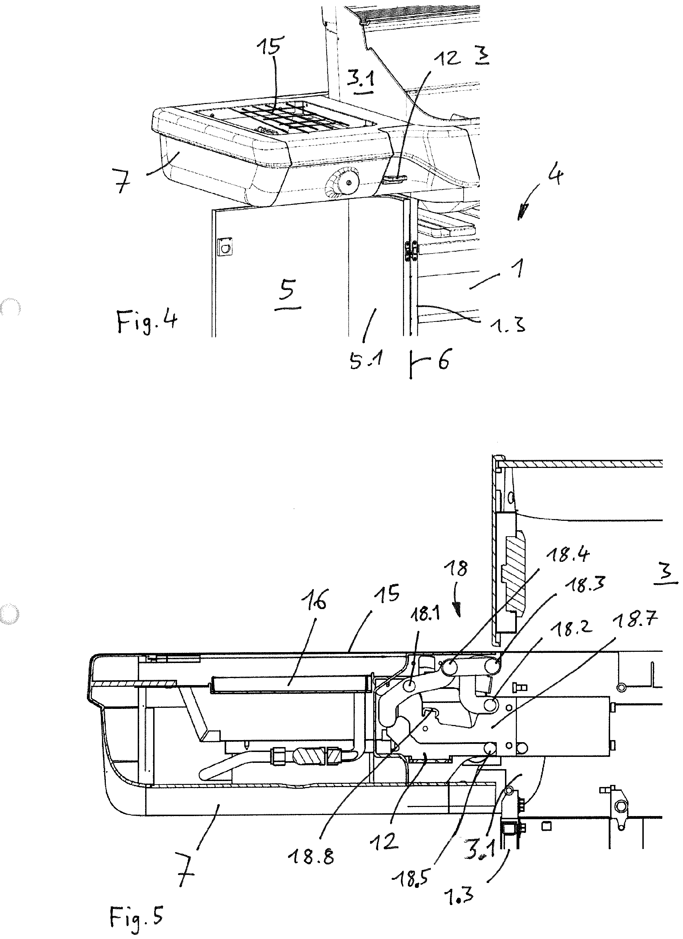

In der Figur 5 befindet sich das Viergelenk 18 in einem durch die Arretiervorrichtung 12 mechanisch blockierten Zustand mit dem Seitentisch 7 in der Gebrauchsposition, dargestellt in einer Ansicht in der Tiefenrichtung des Seitentischs 7. Das Viergelenk 18 umfasst zwei Anlenkpunkte oder Drehgelenke 18.1, 18.2 am Untergestell 1 oder Garraum 3, die beispielsweise an einer an der Außenseite 1.3 des Untergestells 1 beziehungsweise der darüber angeordneten Seitenwand 3.1 des Garraums 3 angeschlossenen Konsole 18.7 vorgesehen sind. Auch ein Drehgelenk 18.5 der Arretiervorrichtung 12, die vorliegend einen federvorgespannten Gelenkhebel 12.2 umfasst, ist im gezeigten Ausführungsbeispiel an der Konsole 18.7 vorgesehen.

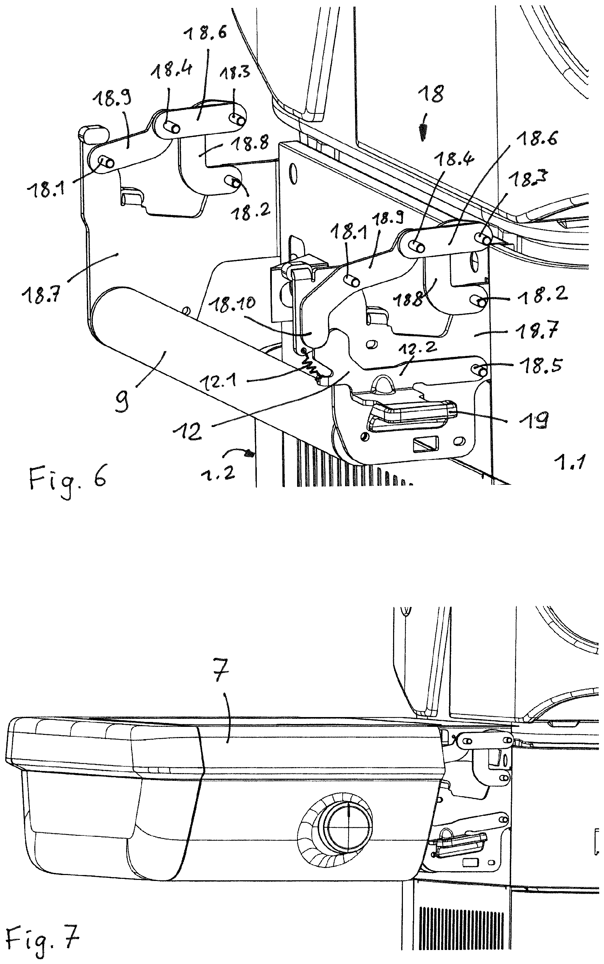

Die Funktionsweise des Viergelenks 18 und der Arretiervorrichtung 12 soll nachfolgend anhand der Figuren 6 bis 11 exemplarisch erläutert werden. In den Figuren 6 und 7 ist die Stellung des Viergelenks 18, in der Figur 7 auch des Seitentischs 7, in der arretierten Gebrauchsposition des Seitentischs 7 dargestellt. Wie man sieht, wird das Viergelenk 18 durch zwei parallele Mehrgelenkscharniere beziehungsweise Koppelgetriebe im Bereich der Vorderseite 1.1 beziehungsweise der Rückseite 1.2 des Untergestells 1 beziehungsweise des darüber angeordneten Garraums 3 gebildet. Jedes Koppelgetriebe bildet die Drehgelenke 18.1, 18.2, 18.3 und 18.4 aus, sodass parallel zueinander gerichtete Drehachsen durch diese Drehgelenke 18.1-18.4 erreicht werden.

Der Seitentisch 7 ist an den Drehgelenken 18.3, 18.4 an ersten Koppeln 18.6 der Koppelgetriebe fixiert, sodass sich der Seitentisch 7 gemeinsam mit den ersten Koppeln 18.6 bewegt beziehungsweise verschwenkt wird. Die ersten Koppeln 18.6 sind jeweils über das dritte Drehgelenk 18.3 an zweiten Koppeln 18.8 gelenkig angeschlossen, die zweiten Koppeln 18.8, die beispielsweise C-förmig sind, jedoch nicht zwingend, sind mit den zweiten Drehgelenken 18.2 an den ortsfesten Konsolen 18.7 angeschlossen. Ferner sind die ersten Koppeln 18.6 gelenkig über das vierte Drehgelenk 18.4 jeweils an einer dritten Koppel 18.9 angeschlossen, die gelenkig über das erste Drehgelenk 18.1 an der Konsole 18.7 angeschlossen ist.

Bevorzugt ist das ortsfeste erste Drehgelenk 18.1 in der Horizontalrichtung weiter von der Außenseite 1.3 und dem Garraum 3 entfernt als das ortsfeste zweite Drehgelenk 18.2. Das verlagerbare vierte Drehgelenk 18.4 kann in der Gebrauchsposition des Seitentisches 7 in der Horizontalrichtung weiter von der Außenseite 1.3 und dem Garraum 3 entfernt sein als das verlagerbare dritte Drehgelenk 18.3.

Im gezeigten Ausführungsbeispiel weist die dritte Koppel 18.9 eines der beiden Koppelgetriebe eine Verlängerung 18.10 auf, an welcher der federvorgespannte Gelenkhebel 12.2 der Arretiervorrichtung 12 angreift, um eine Verdrehung der dritten Koppel 18.9 um die Drehachse des ersten Drehgelenks 18.1 im Sinne eines Verschwenkens des Seitentischs 7 aus der Gebrauchsposition in die Verstauposition zu blockieren. Hierzu umfasst die Arretiervorrichtung 12 eine Zugfeder 12.1, die den Gelenkhebel 12.2 gegen die Verlängerung 18.10 drückt. Der Gelenkhebel 12.2 der Arretiervorrichtung 12 kann mit der Taste 19 entgegen der Kraft der Zugfeder 12.1 verschwenkt werden, um die Verlängerung 18.10 der dritten Koppel 18.9 freizugeben.

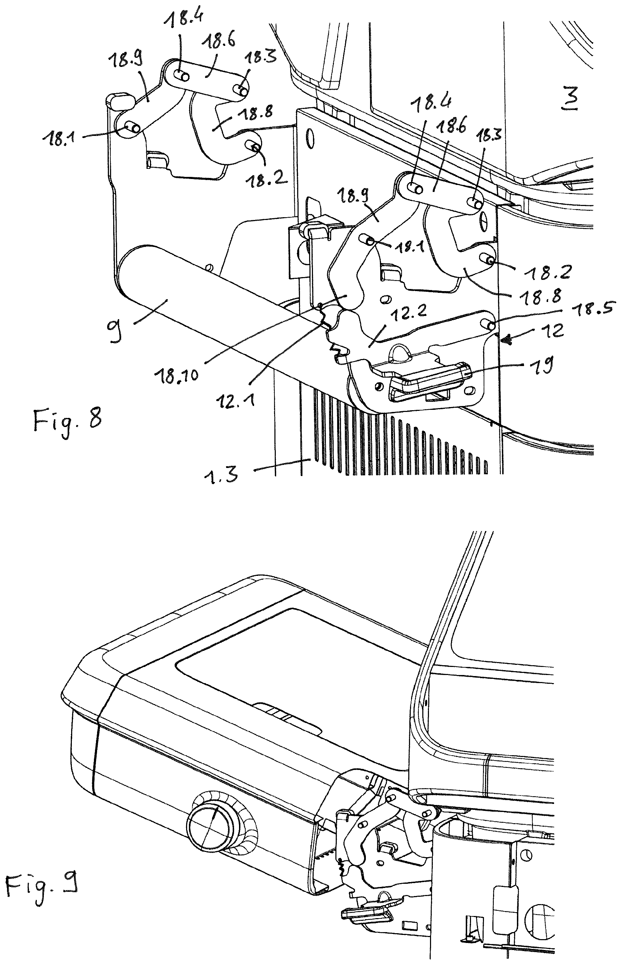

Wenn diese Freigabe erfolgt ist, können die dritten Koppeln 18.9 derart um die Drehachse der ersten Drehgelenke 18.1 verschwenkt werden, dass sie die der Außenseite 1.3 abgewandten Enden der ersten Koppeln 18.6 mit den vierten Drehgelenken 18.4 anheben und die der Außenseite 1.3 zugewandten axialen Enden der ersten Koppeln 18.6 mit den dritten Drehgelenken 18.3 absenken, wobei die zweiten Koppeln 18.8 um die Drehachse der zweiten Drehgelenke 18.1 in Richtung vom Garraum 3 nach außen verschwenkt werden. Die Verlängerung 18.10 kann entlang des freien Endes des Gelenkhebels 12.2 gleiten, ohne blockiert zu werden. Dieser Zustand ist in den Figuren 8 und 9 gezeigt.

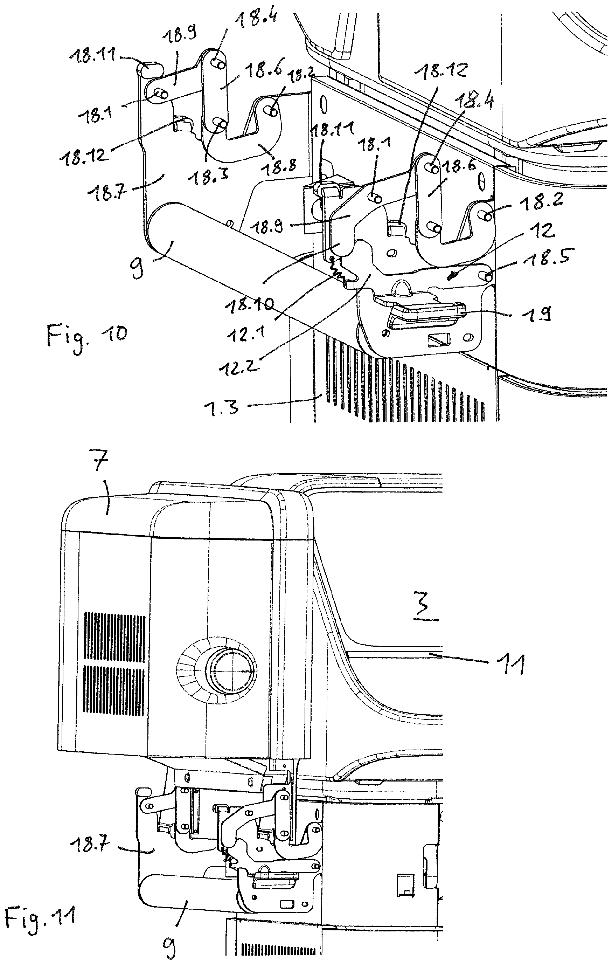

Wenn nun bei fortlaufender Verschwenkung des Seitentischs 7 dieser zusammen mit den ersten Koppeln 18.6 eine zumindest im Wesentlichen vertikale Ausrichtung erreicht, wie in den Figuren 10 und 11 gezeigt ist, sodass das vierte Drehgelenk 18.4 vertikal oberhalb des dritten Drehgelenks 18.3 positioniert ist, rastet der Gelenkhebel 12.2 aufgrund der Federkraft der Zugfeder 12.1 auf der der Außenseite 1.3 zugewandten Seite der Verlängerung 18.10 der dritten Koppel 18.9 ein, sodass die dritte Koppel 18.9 auf der Seite der Arretiervorrichtung 12, hier vorne in den Figuren 10 und 11 angeordnet gezeigt, nicht um die Drehachse des ersten Drehgelenks 18.1 zurückgedreht werden kann und ein Verschwenken der ersten Koppeln 18.6 zusammen mit dem Seitentisch 7 aus der gezeigten Verstauposition in Richtung der Gebrauchsposition blockiert wird. Um diese blockierte Stellung zu lösen, muss der Gelenkhebel 12.2 wieder mit der Taste 19 entgegen der Kraft der Zugfeder 12.1 nach unten um die Drehachse fünften Drehgelenks 18.5 verschwenkt werden, sodass das Ende der Verlängerung 18.10 der dritten Koppel 18.9 freigegeben wird und das freie Ende der Verlängerung 18.10 entlang des Gelenkhebels 12.2 in Richtung der Außenseite 1.3 verschwenkt werden kann.

Bevorzugt sind alle Anschlagstellen des Viergelenks 18 beziehungsweise des Seitentisches 7 mit Dämpfern, insbesondere mit Gummipuffern, ausgestattet, hier die Anschläge 18.11 an den Konsolen 18.7, an denen die dritten Koppeln 18.9 in der Verstauposition des Seitentischs 7 anschlagen, und die Anschläge 18.12, auf denen der Seitentisch 7 in der Verstauposition sitzt.

Im gezeigten Ausführungsbeispiel kann der Seitentisch 7 von einer Seite auf die an den Drehgelenken 18.3 und 18.4 ausgebildeten Zapfen aufgeschoben werden. Bevorzugt sind daher die Koppeln 18.6, 18.8, 18.9 jeweils auf derselben Seite der entsprechenden Konsole 18.7 angeordnet, das heißt bevorzugt auf deren Vorderseite, um eine Montage von vorne zu ermöglichen, oder auf deren Rückseite. Die Montage auf der Vorderseite ermöglicht, dass der Seitentisch 7 beziehungsweise eine Wand desselben auch über die Taste 19 geschoben werden kann.

In der Figur 4 ist gezeigt, dass in der Gebrauchsposition des Seitentischs 7 die Schwingtüre 5 des Untergestells 1 um 180 Grad aus der geschlossenen Position in die geöffnete Position verschwenkt werden kann, sodass sie sich unterhalb des Seitentischs 7 befindet. Da der Seitentisch 7 nicht aus der gezeigten Gebrauchsposition nach unten geklappt werden kann, besteht keine Kollisionsgefahr mit der Schwingtüre 5.

Aus der Figur 4 erkennt man auch die dreidimensionale Gestaltung der Schwingtüre 5, die im Bereich ihres drehgelenkigen Anschlusses um die Vertikalachse 6 an der Außenseite 1.3 des Untergestells 1 mit einer Abkantung beziehungsweise einer Biegung oder einem Radius 5.1 versehen ist, um zusätzlichen Stauraum zu schaffen, sodass beispielsweise Grillutensilien innen an der Schwingtüre 5 befestigt werden können und beim Zuschwenken der Schwingtüre 5 nicht mit übrigen Bauteilen des Untergestells 1 kollidieren.

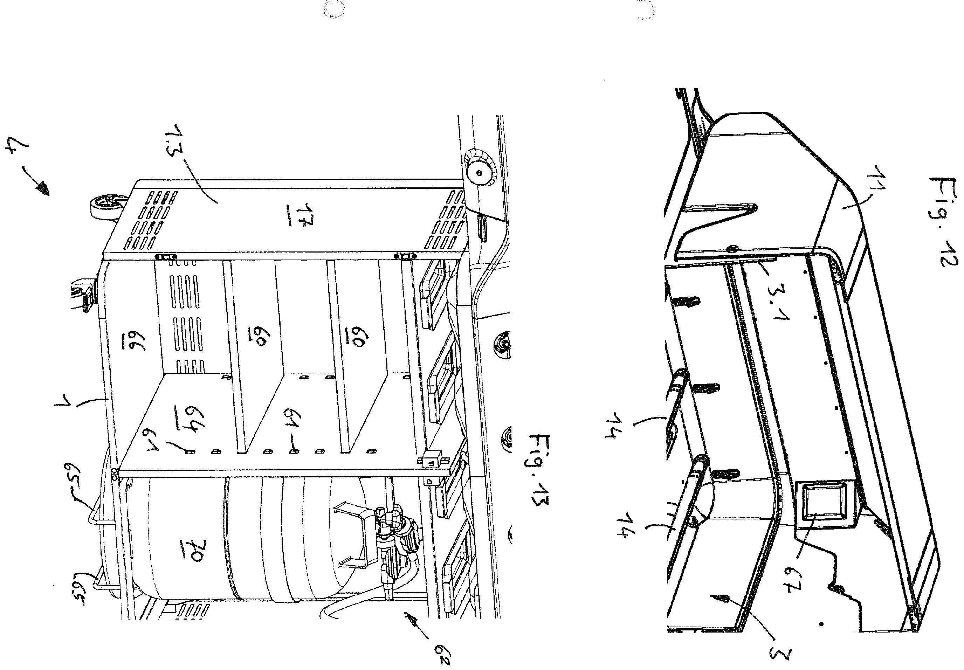

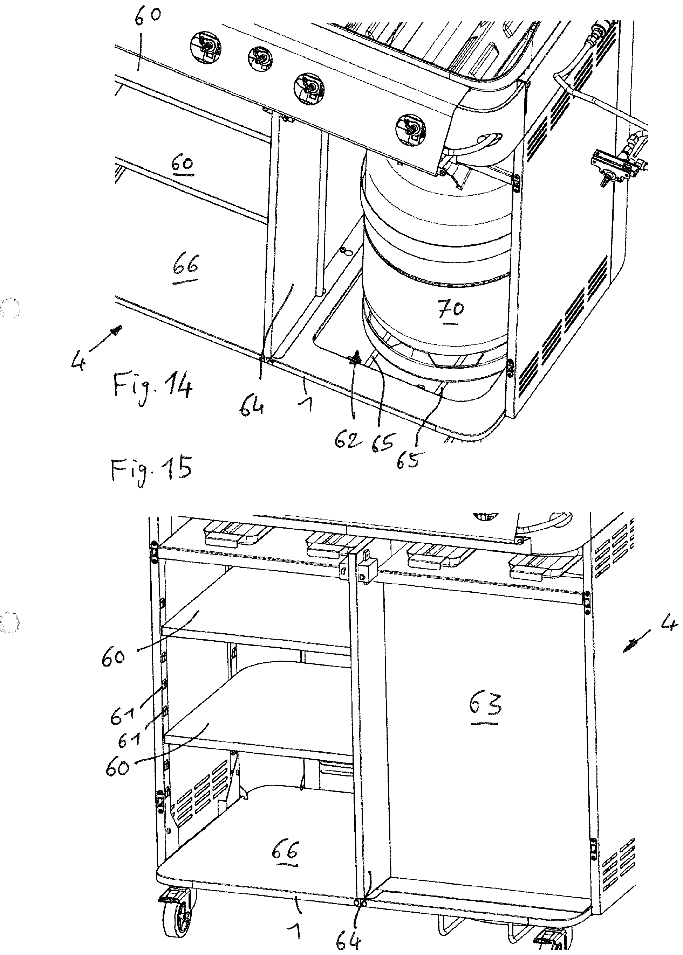

Beispielhafte Gestaltungen für den Innenraum des vom Untergestell 1 gebildeten Schranks 4 sind in den Figuren 13 bis 15 gezeigt, hier jeweils ohne die angeschlossenen Schwingtüren 5. So weist der Schrank Fachböden oder Regalböden 60 auf, die höhenverstellbar im Untergestell 1 montiert sind. Hierfür sind vertikal übereinander beabstandete Regalbodenhalter 61 vorgesehen, auf welche die Regalböden 60 wahlweise aufgelegt werden können. Ferner ist im Untergestell 1 ein Aufnahmeraum 62 für eine Gasflasche 70 vorgesehen. Der Aufnahmeraum 62 ist vor der Gasflasche 70 mit einer Gasflaschenabdeckung 63 überdeckt, siehe die Figur 11. Vor der Gasflaschenabdeckung 63, die in das Untergestell 1 als Zwischenwand eingesetzt ist, kann dadurch zusätzlicher Stauraum, beispielsweise für Grillutensilien, die insbesondere an der Gasflaschenabdeckung 63 befestigt werden können, geschaffen werden.

Der Aufnahmeraum 62 für die Gasflasche 70 ist ferner vom Stauraum mit den Regalböden 60 durch eine vertikale Zwischenwand 64 abgetrennt, welche zusammen mit der Wand 17, die die Außenseite 1.3 ausbildet, die Regalbodenhalter 61 trägt.

Im Bereich des Bodens des Aufnahmeraums 62 sind Gleitschienen 65 vorgesehen, auf welche die Gasflasche 70 aufgesetzt werden kann und entlang von welchen die Gasflasche 70 im Aufnahmeraum 62 reibungsarm nach hinten geschoben werden kann. Die Gleitschienen 65 können dabei tiefer als der Boden 66 des Schranks 4 im Bereich mit den Regalböden 60 angeordnet sein. Dies ist jedoch nicht zwingend. Die Gleitschienen 65 können den einzigen Boden für die Gasflasche 70 ausbilden.

Die hier dargestellte und anhand der Figuren 4, 9 bis 11 erläuterte Gestaltung des Schranks 4, insbesondere in Verbindung mit den Schwingtüren 5, kann auch unabhängig von der Gestaltung der schwenkbaren Seitentische 7 ausgeführt sein und in Verbindung mit nicht verschwenkbaren Seitentischen 7 oder auch ohne Seitentische 7 bei einem Outdoor-Grill ausgeführt werden.

In der Figur 12 ist ein weiterer Aspekt dargestellt, der unabhängig von den weiteren hier dargestellten Aspekten bei einem Outdoor-Grill vorgesehen sein kann. So ist im Bereich der Vorderseite einer Haube 11 innen eine elektrische Beleuchtung 67 montiert, die den Garraum 3 schräg nach hinten beleuchtet. Die elektrische Beleuchtung 67 ist dabei derart positioniert, dass der Garraum 3 sowohl im geschlossenen Zustand der Haube 11 als auch im nach oben geschwenkten Zustand der Haube 11 beleuchtet wird. Anstelle einer Beleuchtungsrichtung diagonal durch den Garraum 3, könnte die Beleuchtungsrichtung auch in der Längsrichtung oder in der Querrichtung erfolgen.

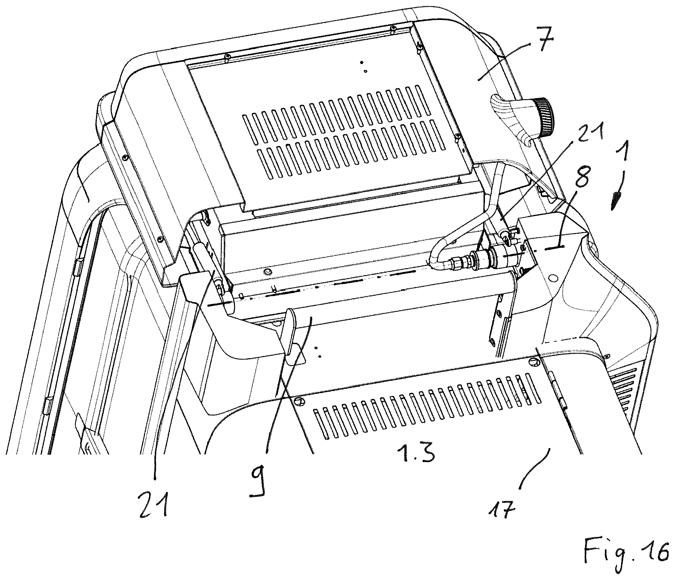

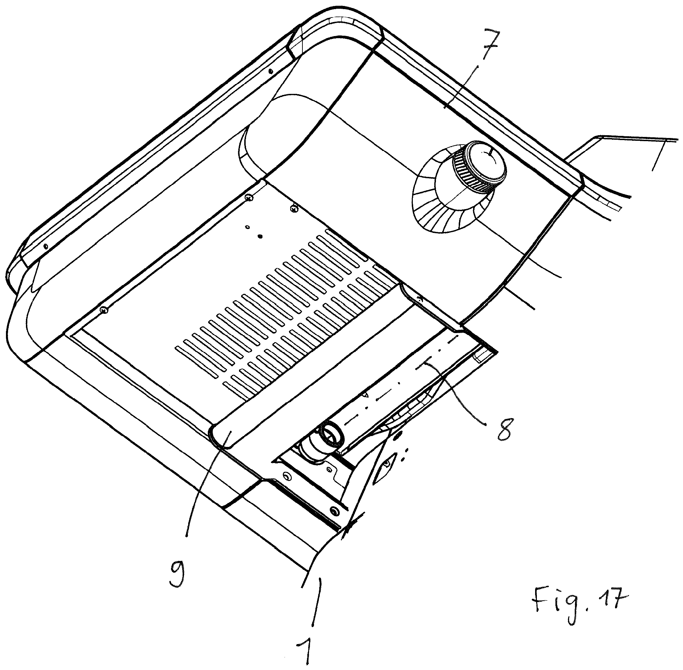

In den Figuren 16 und 17 ist ein weiteres Ausführungsbeispiel eines erfindungsgemäßen Outdoor-Grills gezeigt. Die Figur 16 zeigt dabei den Seitentisch 7 in der vertikalen Verstauposition und die Figur 17 zeigt den Seitentisch 7 in der horizontalen Gebrauchsposition.

Erfindungsgemäß ist der Seitentisch 7 um die erste Horizontalachse 8 verschwenkbar, die parallel zur Außenseite 1.3 verläuft und oberhalb des Griffes 9 angeordnet ist. Im gezeigten Ausführungsbeispiel ist der Seitentisch 7 mit einem einzigen Gelenk, beispielsweise Scharniergelenk, das auf der Horizontalachse 8 angeordnet ist, am Untergestell 1 angeschlossen.

Entlang der ersten Horizontalachse 8 erstreckt sich ferner eine Gaskupplung 20, mit welcher der Nebenbrenner 16 (in der Figur 16 nicht erkennbar) im Seitentisch 7 an einem Gasanschluss des Untergestells 1 angeschlossen ist. Die Gaskupplung 20 ist bevorzugt als Steckkupplung ausgeführt. Durch die Anordnung der Gaskupplung 20 auf der ersten Horizontalachse 8 wird vermieden, dass beim Verschwenken des Seitentischs 7 um die erste Horizontalachse 8 ungünstige Zugkräfte auf die mit der Gaskupplung 20 gekuppelte Gasleitung, insbesondere in Form eines Gasschlauchs, des Seitentischs 7 ausgeübt werden.

In der Gebrauchsposition des Seitentischs 7 wird der Gasanschluss am Untergestell und/oder die Gaskupplung 20 vorteilhaft von oben vom Seitentisch 7 abgedeckt, um sie zu schützen.

Aus der Figur 16 ist ferner ersichtlich, dass der Seitentisch 7 mit wenigstens einem Dämpfer in der vertikalen Verstauposition gegen Herunterfallen gesichert ist. Wenn der Dämpfer als Druckfeder, insbesondere Gasdruckfeder ausgeführt ist, erleichtert dies ferner das Verbringen des Seitentischs 7 aus der horizontalen Gebrauchsposition in die vertikale Verstauposition.

Im gezeigten Ausführungsbeispiel sind zwei Dämpfer 21 vorgesehen, nämlich an beiden Enden des Seitentischs 7.

Besonders bevorzugt wird der Seitentisch 7 in beiden Positionen, der Verstauposition und der Gebrauchsposition, durch den Dämpfer 21 gehalten und der Seitentisch 7 kann nur gegen die Dämpfungskraft des Dämpfers 21 aus der Verstauposition in die Gebrauchsposition und aus der Gebrauchsposition in die Verstauposition verschwenkt werden.

### Bezugszeichenliste

- 1: Untergestell
- 1.1: Vorderseite
- 1.2: Rückseite
- 1.3: Außenseite
- 1.4: Außenseite
- 2: Rad
- 3: Garraum
- 3.1: Seitenwand
- 4: Schrank
- 5: Schwingtüre
- 5.1: Radius
- 6: Vertikalachse
- 7: Seitentisch
- 8: erste Horizontalachse
- 9: Griff
- 10: zweite Horizontalachse
- 11: Haube
- 12: Arretiervorrichtung
- 12.1: Zugfeder
- 12.2: Gelenkhebel
- 13: erste Grillfläche
- 14: Hauptbrenner
- 15: zweite Grillfläche
- 16: Nebenbrenner
- 17: Wand
- 18: Viergelenk
- 18.1: Drehgelenk
- 18.2: Drehgelenk
- 18.3: Drehgelenk
- 18.4: Drehgelenk
- 18.5: Drehgelenk
- 18.6: erste Koppel
- 18.7: Konsole
- 18.8: zweite Koppel
- 18.9: dritte Koppel
- 18.10: Verlängerung
- 18.11: Anschlag
- 18.12: Anschlag
- 19: Taste
- 20: Gaskupplung
- 21: Dämpfer
- 60: Regalboden
- 61: Regalbodenhalter
- 62: Aufnahmeraum
- 63: Gasflaschenabdeckung
- 64: Zwischenwand
- 65: Gleitschiene
- 66: Boden
- 67: Beleuchtung
- 70: Gasflasche

## Patentansprüche

1. Outdoor-Grill
1.1 mit einem Untergestell (1) mit Rädern (2), wobei das Untergestell (1) eine Vorderseite (1.1), eine hierzu entgegengesetzte Rückseite (1.2) und zwei einander entgegengesetzte Außenseiten (1.3, 1.4) aufweist;
1.2 mit einem auf dem Untergestell (1) angeordneten Garraum (3); wobei
1.3 das Untergestell (1) einen Schrank (4) mit wenigstens einer Schwingtüre (5) ausbildet, die die Vorderseite (1.1) des Untergestells (1) wenigstens teilweise abdeckt und um eine Vertikalachse (6) seitlich nach außen verschwenkbar ist;
1.4 mit wenigstens einem Seitentisch (7), der seitlich zum Garraum (3) auf einer Außenseite (1.3, 1.4) des Untergestells (1) oder einer Seitenwand (3.1) des Garraums (3) montiert ist;
**dadurch gekennzeichnet, dass**
1.5 der wenigstens eine Seitentisch (7) verschwenkbar um eine erste Horizontalachse (8), die parallel zur Außenseite (1.3, 1.4) verläuft, oberhalb eines Griffes (9) zum Verschieben des Outdoor-Grills und/oder zum Anheben der Außenseite (1.3, 1.4) am Untergestell (1) oder der Seitenwand (3.1) angeschlossen ist.

2. Outdoor-Grill gemäß Anspruch 1, **dadurch gekennzeichnet, dass** eine um eine zweite Horizontalachse (10), die parallel zur Vorderseite (1.1) des Untergestells (1) verläuft, verschwenkbare Haube (11) wenigstens mittelbar am Untergestell (1) montiert ist, die den Garraum (3) wahlweise abdeckt oder freigibt.

3. Outdoor-Grill gemäß einem der Ansprüche 1 oder 2, **dadurch gekennzeichnet, dass** der wenigstens eine Seitentisch (7) aus einer ersten horizontalen Gebrauchsposition nach oben in eine zumindest im Wesentlichen vertikale Verstauposition verschwenkbar ist.

4. Outdoor-Grill gemäß Anspruch 3, **dadurch gekennzeichnet, dass** der wenigstens eine Seitentisch (7) in der Verstauposition mittels einer Arretiervorrichtung (12) und/oder einen Dämpfer (21) gegen Verschwenken fixierbar und/oder sicherbar ist.

5. Outdoor-Grill gemäß Anspruch 4, **dadurch gekennzeichnet, dass** der wenigstens eine Seitentisch (7) mittels der Arretiervorrichtung (12) und/oder dem Dämpfer (21) auch in der Gebrauchsposition gegen Verschwenken fixierbar und/oder sicherbar ist.

6. Outdoor-Grill gemäß einem der Ansprüche 3 bis 5, **dadurch gekennzeichnet, dass** der wenigstens eine Seitentisch (7) mit wenigstens einem Dämpfer (21) zumindest gegen Herunterfallen aus der Verstauposition in die Gebrauchsposition gesichert ist.

7. Outdoor-Grill gemäß einem der Ansprüche 1 bis 5, **dadurch gekennzeichnet, dass** der wenigstens eine Seitentisch (7) mit einem Viergelenk (18) am Untergestell (1) oder der Seitenwand (3.1) angeschlossen ist.

8. Outdoor-Grill gemäß einem der Ansprüche 1 bis 7, **dadurch gekennzeichnet, dass** der Outdoor-Grill als Gasgrill ausgeführt ist.

9. Outdoor-Grill gemäß Anspruch 8, **dadurch gekennzeichnet, dass** im Garraum (3) eine erste Grillfläche (13) mit einem oder mehreren Hauptbrennern (14) vorgesehen ist und im Seitentisch (7) eine zweite Grillfläche (15) mit wenigstens einem Nebenbrenner (16) vorgesehen ist.

10. Outdoor-Grill gemäß Anspruch 9, **dadurch gekennzeichnet, dass** der Nebenbrenner (16) über eine Gasleitung mit einer Gaskupplung (20) am Untergestell (1) angeschlossen ist, wobei sich die Gaskupplung (20) entlang der ersten Horizontalachse (8) erstreckt.

11. Outdoor-Grill gemäß einem der Ansprüche 1 bis 10, **dadurch gekennzeichnet, dass** wenigstens ein Rad (2) im Bereich der Vorderseite (1.1) und wenigstens ein Rad (2) im Bereich der Rückseite (1.2) am Untergestell (1) diagonal zu dem Griff (9) angeschlossen ist.

12. Outdoor-Grill gemäß einem der Ansprüche 1 bis 11, **dadurch gekennzeichnet, dass** die Schwingtüre (5) bis unter den Seitentisch (7) verschwenkbar ist.

13. Outdoor-Grill gemäß einem der Ansprüche 1 bis 12, **dadurch gekennzeichnet, dass** im Untergestell (1) ein Aufnahmeraum (62) für eine Gasflasche (70) vorgesehen ist, wobei in dem Aufnahmeraum (62) Gleitschienen (65) angeordnet sind, auf welche die Gasflasche (70) aufstellbar und in einer Tiefenrichtung tiefer in den Aufnahmeraum (62) hinein verschiebbar ist, um Stauraum im Aufnahmeraum (62) vor der Gasflasche (70) zu schaffen, wobei insbesondere eine herausnehmbare Gasflaschenabdeckung (63) im eingesetzten Zustand den Stauraum auf dessen Rückseite begrenzt.

14. Outdoor-Grill gemäß einem der Ansprüche 2 bis 13, **dadurch gekennzeichnet, dass** die verschwenkbare Haube (11) auf ihrer dem Garraum (3) zugewandten Oberfläche im Bereich der Vorderseite (1.1) des Untergestells (1) eine Beleuchtung (67) umfasst, und die Haube (11) insbesondere ein Sichtfenster aufweist.
